# EUROPEAN PATENT SPECIFICATION

(11) **EP 3 032 448 B1**
(45) Date of publication and mention of the grant of the patent: **22.01.2020**
(21) Application number: 15198462.2
(22) Date of filing: 08.12.2015
(51) Int. Cl.: G06F 21/33, G06Q 20/32, G06Q 20/38, G06Q 20/42, H04L 29/06, H04W 12/06, H04W 12/08

(54) **METHOD FOR AUTHORIZING ACCESS TO INFORMATION IN A TELECOMMUNICATION SYSTEM**
VERFAHREN ZUR AUTORISIERUNG DES ZUGRIFFS AUF INFORMATIONEN IN EINEM TELEKOMMUNIKATIONSSYSTEM
PROCEDE D'AUTORISATION D'ACCES A DES INFORMATIONS DANS UN SYSTEME DE TELECOMMUNICATION

(30) Priority: 08.12.2014 EP 14196811
(43) Date of publication of application: 15.06.2016
(73) Proprietor: IPCom GmbH & Co. KG, 82049 Pullach (DE)
(72) Inventor: HANS, Martin, 31162 Bad Salzdetfurth (DE)
(74) Representative: Tomlinson, Edward James

(56) References cited:
- EP-A1- 2 562 704
- US-A- 6 078 908
- US-A1- 2014 357 253
- Sms Enabler: "Forward SMS to Email", , 17 January 2011 (2011-01-17), XP055180698, Retrieved from the Internet: URL:https://web.archive.org/web/2011011703 3014/http://smsenabler.com/sms-to-email.ht ml [retrieved on 2015-04-01]

## Description

The present invention relates to the provision of security mechanisms in telecommunication systems, especially mobile telecommunication systems. Nowadays user equipment, such as cell phones, communicate across several technologies and in accordance with several protocols and transmission techniques. Cell phones typically support cellular communication as well as device-to-device communication establishing proximity services. Approaches therefore need to address mobile telecommunication standards such as GSM, UMTS, CDMA2000, LTE, LTE-U and the like in combination with further standards, such as the IEEE 802.11 family of standards, commonly known as WLAN or Wi-Fi. New issues arise with respect to open communication platforms allowing users to share even confidential information across several end devices.

In case hardware drivers are distributed over a network, interoperability of the target system with respective drivers needs to be granted. Therefore the access has to be controlled regarding read operations of the target system, as well as forwarding operations to said target system need be controlled and in the case of a lack of interoperability they need to be restricted.

Furthermore access certificates of certain web services are only valid for a single network device and must not be shared with further devices. Such a certificate may be valid for a specific time slot. Hence, hardware is required which uses the certificate for its own authentication but does not allow further devices access under usage of its own confidential certificate. This allows the implementation of wireless hardware keys, which protect their security information.

A known security mechanism for internet banking is the so called mobile transaction authentication number, or mTAN. The mobile phone number of a user is securely stored with a bank offering internet banking. The user is authenticated for every transaction by sending him a text message, known as an SMS, to his mobile phone with a summary of the transaction information and an ID that is individual to the single transaction. The user has to type the received ID, e.g. a six digit number, into a field in the banking website to authorize the transaction and authenticate himself. The security requirements to knowledge of the ID itself, once generated, are relatively relaxed: The ID authenticates the single transaction only; it cannot be misused to authenticate any other transactions. According to known methods no devices are secure from being misused or from being affected by viruses. Therefore and for the reasons given above, internet banking with mTAN and reception of mTAN-related text messages should never be done on the same device to prevent malicious users or viruses from initiating erroneous transactions and authenticating them from a single device.

US 6,078,908 describes a general authorizing routine employing a transaction authorization number.

Known methods provide for blocking text messages in the mobile network or in the mobile device to prevent spam (not processing but discarding the messages), blocking text messages within social networks from defined users or with defined content or similar methods. In addition the prior art describes methods that define the blocking criteria, e.g. after having received the first message of a sender defining the sender address as to be blocked either directly in the mobile device or providing that information to the network. Further various methods for synchronization of text messages with messaging servers between devices and server or across devices are known.

US 8,326,279 describes techniques that can be used to enable a user to access functionality of a mobile device from a separate computer wirelessly. As one example, the user can use a separate computer to view and respond to short message service SMS messages of the mobile device. As another example, the user can access a missed call history and/or overall call history of a mobile device wirelessly using a separate computer. Synchronization of message inbox and outbox as well as phone call lists are described. No blocking of any kind of communication is mentioned in the document.

US 6,052,735 describes synchronization of messaging applications and information management entities between mobile phones and other devices so that the user can apply individual preferences on the availability of attachments within mails on the various synchronized devices. No blocking of any kind of communication is mentioned in the document.

US 8,326,279 describes systems and methods for utilizing features provided by a mobile phone by other devices. With this it is possible to receive, answer, write and transmit SMS or other messages with a laptop and use a connected mobile phone to physically receive and transmit. Similar features are provided for other applications like voice calls.

US 2014/0230044 A1 discloses a method for authenticating access of a virtual private cloud, which are used for performing VPC access authentication between networks that communicate with each other using an IP routing protocol.

WO 2014/069898 A1 discloses a method for authenticating access authority for a specific resource in a wireless communication system.

US 8,595,498 discloses a method for protecting the access to a secured chip in particular with a test device by preventing unauthorized operations on data stored in memories of the chip.

US 6,732,278 discloses a device for providing a user with secure access to a network resource, comprising a first module for authenticating a user to said device and a second module responsive to said first module for providing the user with access to the network resource using a network resource password unknown to the user.

Further known methods allow reception of all kind of text messages on all kinds of devices. That means an SMS, although technically only receivable by a mobile phone, will be transferred to computers in general etc. This is very user friendly because an SMS can be received and answered on all devices without restriction of some messaging services. These features will break the security rules and allow viruses as well as malicious users to initiate transactions and authenticate them from the same device. As an example consider an office where staff can use any logged-in computers for several tens of seconds without interruption or being noticed. This time is sufficient to initiate a banking transaction and authenticate it via SMS on the computer. A client program or a virus can do the same in the background without even requiring the computer to be left unattended.

Such an arrangement is described by Alexander Smirnov on his web-site "smsenabler.com" in the document "SMS to Email".

It is therefore an object of the present invention to provide an improved method for implementing security mechanism that can be integrated into a telecommunication system requiring only minor amendments. Already implemented technological features of existing technology need to be considered, such as heterogeneous mobile/ stationary device scenarios along with respective communication protocols.

This object is solved by a method for authorizing access to confidential information signals in a telecommunication system holding features according to claim 1.

The present invention is directed towards a method for authorizing access to confidential information signals in a telecommunication system. The information signals may encode messages being received by a mobile user equipment. In case confidential information is received by an authorized cell phone means are required to ensure that the information is not shared among several other end devices. Hence, direct access from said other devices to the information needs to be controlled as well as forwarding operations distributing the confidential information to further unknown devices need to be controlled. By adapting implemented features towards the presented approach the present invention takes technical features of legacy telecommunication standards into account. For instance existing data header information can be reused and/or enhanced to carry at least one additional bit for indicating access information. The present invention allows an authorized network device to receive and fully access information, while a further network device is excluded from access and furthermore forwarding operations are restricted. The present invention is also directed towards respective end devices such as user equipment, base stations, routers and telecommunication systems.

Accordingly, a method for authorizing access to confidential information signals in a telecommunication system is suggested. The method comprises receiving at least one information signal from a first network device by a second network device, applying a stored evaluation metric on the received at least one information signal and assigning an access right as a function of an evaluation result to a third network device for accessing the at least one received information signal.

The present invention suggests a method for restricting the access to confidential information among end devices. After security barriers are implemented between devices in many usage scenarios users are nonetheless enabled to share confidential information, which crosses the established barriers. A telecommunication system is suggested, which provides means for excluding devices from access to confidential information and furthermore restricts message forwarding in mobile scenarios to prevent message distribution.

The new solution to the problem comprises an SMS filter that prevents internet banking related information from being shared with other devices according to one embodiment. A second solution to the problem is an application filter that prevents internet banking related applications from being continued on devices that are supposed to receive information that is used for authorization of transactions initiated by the internet banking related application. The filter in either solution can be switched on and off as a user preference. The filter for the first solution may be based on information context; keywords like "Transaction" or the like, sender name or telephone number. A filter for the second solution may be based on web addresses holding certain keywords, e.g. "https://NameOfAuthServer.de" or the related secured certificate https used for the transport layer security, TLS. The latter is the preferred solution.

The message according to the independent claim 1 can be applied in any usage scenario in which confidential information is sent to a network device, which may only under certain circumstances be shared with further network devices. Such confidential information may for instance be passwords, security settings or generally information that needs to be hidden from further users. Hence, confidential is understood to be a broad term implying that information signals may not be freely distributed and shared among a variety of users. The present invention provides means for authorisation of the access to this information, which means any read or write operation including forwarding operations. Hence, it is restricted that further devices access the information over a network or that said information is forwarded, for instance downloaded, by further devices. Access means direct access to the information as well indirect access such as reception of the information over a third party. The authorisation process can determine that full access is granted to the information or that the access is granted only according to a specific access right or for a specified period of time.
The transmitted information signals may have the form of any electronic communication, such as SMS or E-Mail communication. Information signals can be analogue or digital information transmitted over a telecommunication system. The notion of information signal is not bound to a specific representation, which means that bits can be transmitted as well as plain text. The person skilled in the art recognizes that additional method steps are required such as encoding and decoding of signals towards information signals. Therefore, receiving at least one information signal may furthermore imply that said received information signal is not only received by an antenna device but is furthermore decoded such that further method steps can interpret the semantics of the transmitted information signals. The information signals form information items or in general provide information which can be processed by the further method steps.

The underlying telecommunication system may be a heterogeneous telecommunication system, which means that wired and wireless communication may take place as well as mobile and stationary telecommunication takes place. It may for instance be the case that the second network device is formed by a user equipment, also known as cell phone, and the first network device is formed by a server or a SMS centre.

In one embodiment access is requested from the first network device by a third network device. The third network device is a computer system, such as a PC which desires to log in into the first network device. The security information for logging in is transmitted to the second network device. In this embodiment the third network device communicates with the first network device over an internet connection according to the known http protocol. This may be performed using wired transmission. After reception of the login request the first network device sends an SMS to the second network device over a wireless interface. Hence, stationary as well as mobile equipment is used for obtaining specific access rights. As the security information for logging in into the first network device needs to be distributed to an independent device, namely the second network device for security reasons, the access of the third network device to the information provided by the second network device needs to be restricted. In case only the second network device holds the security information an access right of the third network device towards the second network device would circumvent the security settings of the separate and independent second network device. The technical background is that the second network device may be authenticated and hence under usage of the third network device, which is not necessarily authenticated, access may be granted for any third network device the user chooses. Once the second network device is authenticated the user may request access via the third network device under usage of his authenticated second network device.

While the second network device receives a variety of information signals it is very restrictive to block every message received by the network device for access by further network devices. Hence, an evaluation metric is necessary, which provides rules that describe under which circumstances a further, third network device receives access rights to the information signals. The evaluation metric holds a variety of rules, which can be dynamically updated at runtime and describe under which conditions the third network device is allowed to read or write on the information signals and if the confidential information signals in part or as a whole may be forwarded to the third network device.

It may be of advantage to set an access right flag in the header information of the SMS, which can be retrieved by the evaluation metric. In case such a flag, also referred to as bit, is identified the second network device acquires the information that this specific SMS is not to be forwarded to a third network device and that further access is permitted. Nonetheless, it is possible for the second network device to fully access the confidential information signals. Therefore, a selective filtering approach is suggested, which does not restrict access rights of the user of the second network device. The suggested method provides an approach, which allows the user to fully access the required confidential information signals and does not allow further third network devices to access the information even if the same user is authenticated at the third network device and may in general user the third network devices without further restrictions.

The suggested method can be accomplished completely in the background, without further ado of the user. Hence, the subject matter of the present invention is less error-prone as known methods, which involve the user and let him choose filtering information once the method is received. According to the present invention the security settings can be configured by the first network device before reception of the information signals by the second network device. This provides the advantage over the known methods that the user can receive information signals without restrictions but is safe from abuse of his confidential information signals. There is no need for the user to configure filtering rules as the access rights of the confidential information signals are already configured by the first network device.

The subject matter of the present invention can be integrated into legacy telecommunication standards as existing messaging formats can be reused, such as the SMS format. It may be for instance of advantage to include access right information into the message body of an SMS. Once the evaluation metric retrieves such security information the respective access rights can be set a further access to the received SMS can be allowed or denied.

According to a further aspect of the present invention the information signal comprises at least one of signal header information, a signal body, a sender information, a receiver information, a message content, at least one access right bit, at least one status bit and an access right information. This provides the advantage that the technical features of the respective message format can be adapted and/ or reused for accomplishing the subject matter of the present invention. It is for instance of advantage to set a specialized bit, also referred to as flag, which indicates that the respective message shall not be forwarded. Hence, legacy telecommunication standards can be further used and the subject matter of the present invention can be incorporated without additional technical implementations. Furthermore it is typically error stable to transfer the access information by means of a single bit. Furthermore the access information can be coded by means of keywords, which can also be identified according to known techniques.

According to a further aspect of the present invention the assigned access rights control at least one of a read operation of the third network device, a write operation of the third network device, a forwarding operation of the information signal from the second network device to the third network device, an absolute timeslot for access to the information signal by the third network device and a relative timespan for access to the information signal by the third network device. This provides the advantage that already implemented access operations can be controlled by the method according to the present invention. It may be the case that a message is to be forwarded to a third network device, which is not known and therefore the forwarding of the message is to be prevented. Hence, the second network device assigns a "no-forwarding" bit to the message regarding the third network device. In case the second network device is requested to forward confidential information it looks up the received evaluation results, which may be stored after application of the evaluation metric, and finds that the third network device is not authorized for reception of said confidential information. Hence, the message forwarding can be interrupted by the second network device.

According to a further aspect of the present invention the evaluation metric indicates identity information of at least one third network device with predefined access rights to the information signal. This provides the advantage that a predefined black list of unauthorized network devices can be applied. An identity information may also provide information of a specific device name or technical information such as an IP address or a network provider. In case contacts are stored this information can be reused. Hence, in case a known contact is identified access rights can be granted.

According to a further aspect of the present invention at least one of the network devices is one of a user equipment, a base station, a router, an access point, a personal computer, a notebook, a tablet, a cell phone, a SMS center, a server, a client and a cluster. This provides the advantage that heterogeneous mobile scenarios can be established in which information signals are transferred over a Ethernet wired network and/ or over a wireless interface according to telecommunication standards.

According to a further aspect of the present invention the received information signal is represented by at least one of a SMS, MMS, E-Mail, text message, fax message an authorization code and an authentication code. This provides the advantage that several legacy protocols, data formats and devices can be combined towards the implementation of the subject matter of the present invention.

According to a further aspect of the present invention the second network device holds full access right independently of the access rights being assigned to the third network device. This provides the advantage that access can be granted to the receiving device, which does not restrict the user himself as he holds full access to the information. In this way a selective approach is established, which concentrates on prevention of unauthorized distribution of data without restricting the user.

According to a further aspect of the present invention applying the evaluation metric comprises at least one of retrieving keywords from the information signal, retrieving sender identity information from the information signal, retrieving receiver identity information from the information signal and evaluation of at least one information signal bit. This provides the advantage that the evaluation can be adapted regarding its rules and that several evaluation techniques can be applied alone or in combination. Rules can be dynamically implemented and adapted over time towards the evaluation metric. It may be of advantage that machine learning algorithms are implemented, which consider previously stored evaluation results and adapt the current evaluation metric accordingly.

According to a further aspect of the present invention the stored evaluation metric is saved on at least one of a SIM card, a universal integrated circuit card (UICC), a smart card, a server, a SMS center, an authorization provider and an authentication provider. This provides the advantage that the evaluation metric can be directly stored on a cell phone for instance on a SIM card. In addition to this or instead of this a storage device may be arranged external to the mobile phone. Hence, a service provider can manage evaluation rules and dynamically transmit the respective rules and parameters at runtime to the mobile phone.

According to a further aspect of the present invention the telecommunication network is a wireless network being operated according to at least one of GSM, UMTS, the LTE family of standards and the IEEE 802.11 family of standards. This provides the advantage that legacy techniques and telecommunication protocols can be applied with only minor adaptions.

According to a further aspect of the present invention the wireless telecommunication network is operated in one of an infrastructure mode, a device-to-device mode, an ad-hoc mode and a cellular environment. This provides the advantage that heterogeneous environments are supported in which information signals are requested over LTE for instance and are forwarded over a LTE standard. Hence, cellular techniques can be combined with mobile-to-mobile transmission techniques. This is of advantage as techniques from one technology can be reused by another one. For instance the SMS header can be interpreted and the retrieved information can be reused in a WLAN environment. It may be the case that a "no-forwarding" flag is set in an SMS header, which results in the prevention of forwarding the information via WLAN. Hence, SMS and WLAN are combined towards a holistic approach instead of focusing on signal technologies.

Usage scenarios typically comprise several mobile devices as well as stationary devices communicating according to different modes, which require the suggested integrated approach. This prevents the implementation of a variety of specialized singular approaches, which need to be coordinated.

According to a further aspect of the present invention the first and the second network device communicate according to a first telecommunication protocol and the second and the third network device communicate according to a different, second telecommunication protocol. This provides the advantage that borders between telecommunication standards are crossed in heterogeneous environments and that the present invention is universally applicable without severe adaptions of network devices.

The object is also solved by a telecommunication protocol for authorizing access to confidential information signals in a telecommunication system, with instructions initiating method steps comprising receiving at least one information signal from a first network device by a second network device, applying a stored evaluation metric on the received at least one information signal and assigning an access right as a function of an evaluation result to a third network device for accessing the at least one received information signal.

The object is also solved by a user equipment for authorization of access to confidential information signals in a telecommunication system, comprising a reception module for receiving at least one information signal from a network device, an evaluation module for applying a stored evaluation metric on the received at least one information signal and an authorization module for assigning an access right as a function of an evaluation result to a further network device for accessing the at least one received information signal.

The object is also solved by a system for authorization of access to confidential information signals in a telecommunication environment, comprising a second network device for reception of at least one information signal from a first network device, an evaluation module for applying a stored evaluation metric on the received at least one information signal and an authorization module for assigning an access right as a function of an evaluation result to a third network device for accessing the at least one received information signal.

Especially beneficial is a filter that is enabled by default and that filters according to criteria known to the device per default or by reception of a regularly updated list from a service provider. Any service provider could maintain the list of mTAN related senders, keywords e.g. received by the banks and/or originators of web addresses or certificates and provide it with updates via any of the available remote configuration mechanisms. As an alternative, the information and web sites to be filtered could be flagged, either as part of the transmission protocol or within the contents.

The invention will now be described merely by way of illustration with reference to the accompanying drawings in which:
Figure 1 shows a usage scenario of an aspect of the present invention;
Figure 2 shows a user equipment for access authorization according to an aspect of the present invention;
Figure 3 shows a system for access authorization according to an aspect of the present invention; and
Figure 4 shows a further system for access authorization according to an aspect of the present invention.

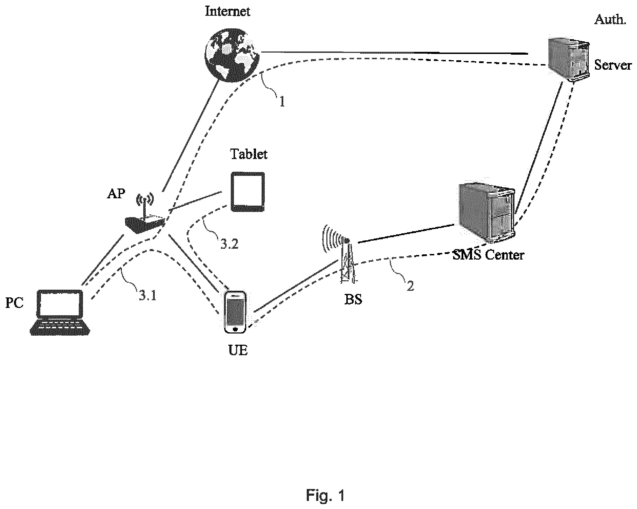

Figure 1 shows a setup of internet banking as an application scenario for the present invention. A personal computer PC is connected to the internet using Wi-Fi technology, e.g. 802.11 a/b/g/n, over a WLAN access point AP. The AP is connected to the internet using for example DSL or other fixed or wired connections not shown in figure 1. A banking web server that is hosting a banking web site is also connected to the internet so that the PC and the banking web server have a logical connection 1 over at least AP and the internet. Logical connections are shown in dashed lines in figure 1. Also connected to the AP are a mobile phone UE and a tablet PC. The UE has logical connections over the AP to the PC 3.1 and to the Tablet 3.2.

The UE has in addition a connection to an operator of a mobile network via a base station BS. The base station may use either or multiple of the known cellular transmission techniques, e.g. GSM, CDMA, UMTS, CDMA2000 or LTE. Within the operator network there is a Short Message Service Centre SMSC that is responsible for reception and transmission of short message between UEs of the same network or between a UE of the same network and other network's short message service centres or other sources of short messages. Within the operator network there are other entities that are necessary to provide services like the short message service to the UE or that are optionally providing additional services to the UE or other devices served by the network. These entities are not shown in figure 1 for ease of readability.

The SMSC may be connected to the banking web server so that the banking web server and the UE have a logical connection 2. Internet banking works first between any device connected to the internet, e.g. PC in figure 1, and a banking web server hosting a banking app or banking web site. A transaction can be triggered from the PC via logical connection 1. As a last step before the transaction is executed by the banking system the user triggers transmission of an SMS to a pre-defined phone number, the SMS containing a mobile transaction number mTAN. The SMS will be transmitted from the banking server via logical connection 2 to the SMSC and from there to the UE.

The SMS is received by the UE and the availability of a new text message is indicated to the user. The user can read the message and will find the mTAN message as expected, probably with a summary of the transaction, recipient, amount of money, date of execution, date of entry to the banking site. The user can then decide whether or not to type the received mTAN into the banking web site and thus authorize the transaction. Now the UE, after reception of short messages, will provide these to or share these with other connected devices. In figure 1 these devices are the PC and the Tablet, which are connected via logical connections 3.1 and 3.2 to the UE. If any of these devices, in the example the PC, is the one device that is used for internet banking, the text message containing the mTAN will be directly available on that device. Thus, the mTAN will not provide the security it is supposed to because malicious users or viruses can read the mTAN and authorize the transaction without the real user being asked.

Such features will also work the other way around: A user may pick up any work he was doing on one device, e.g. the PC, on any other device, e.g. the Tablet or the UE that is connected within the same WLAN. That means any web session on the PC, for example triggering a transaction on an internet banking web site, may be continued on the mobile phone. If the phone is used by a malicious user or a virus is running on the phone an internet banking session may be high-jacked from the PC and the above mentioned security threat exists similarly on the mobile phone, i.e. the mTAN will be received on the device on which the transaction is triggered and authenticated.

Threats may arise for use cases that are not related to internet banking but whose security relies as well on a secure channel between a service provider and a user that has different physical end points than the original service offered. If this is the case, these threats may be overcome by the invention as well.

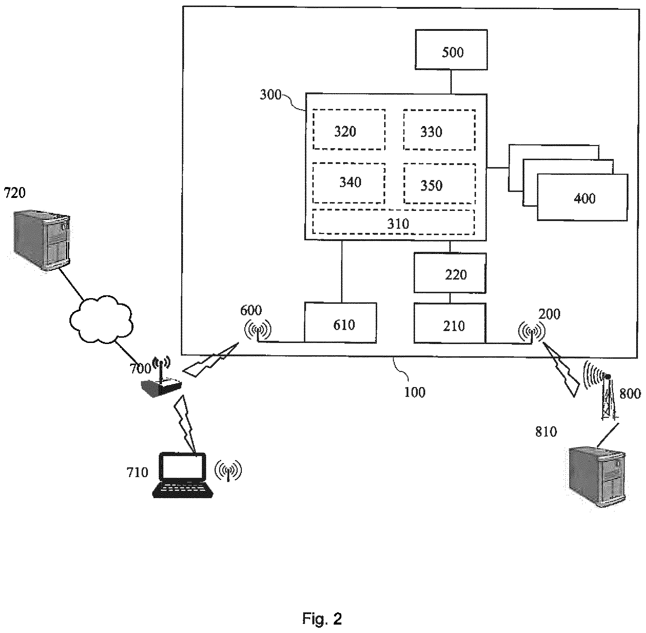

Figure 2 depicts a mobile device according to an aspect of the present invention, UE 100, connected to a cellular network via a base station 800 to a short messaging service centre 810. The UE 100 is in parallel connected to a Wi-Fi network via a WLAN access point 700 to a PC 710 and over the internet which is shown as a cloud to a server 720.

The UE 100 comprises two radio modules. One radio module, RF and base band module 210, is for transmission and reception according to a cellular mobile communication standard, e.g. GSM, UMTS or LTE, with one or more antennas 200 and a protocol stack 220. The other radio module, RF and base band module 610, is for transmission and reception according to a WLAN or Wi-Fi standard, e.g. 802.11 a/b/g/n, with one or more antennas 600. Any of the modules 210, 220 and 610 may be separate hardware modules or may be integrated into a single or multiple hardware modules.

The UE 100 further contains a central processing unit, CPU 300, storage means 400 and display means 500. The storage may be part of the internal circuit board or reside on an external board or a smart card, a memory card or a UICC/SIM or any combination of these. The CPU 300 has access to the storage to read programming code as well as data stored therein. The CPU 300 is able to execute different programming parts, e.g. an operating system OS 310, a messaging application 330, a message filter application 320, a phone book or contacts application 350 and a device application 340 and various other parts not related to this invention.

Short messages are received from the SMS Centre 810 via the BS 800 in the UE 100, specifically via the antenna 200. The RF and base band 210 and protocol stack 220 decode the received signals, so that a text message and possibly message header information are available to all further modules.

The CPU 300 executes the OS 310 and the mentioned applications so that the new text message is provided to the messaging application 330, which may analyse the message and header information. For example it may look up the sender address in the phone book to replace the transmitted address with a real name. This look up may be done alternatively by the OS 310 or the phone book application 350. The message may then be presented to the user via the display 500 and a sound may be played to indicate arrival of a new message according to user preferences.

The messaging application may need to provide new messages to the device application 340 to allow for sharing the messages with other devices. According to the current invention, the message or the sender address is first provided to the filter application 320, which filters those messages that are related to internet banking. Only messages that are not related to internet banking will be forwarded by the filter application 320 to the device application 340 which provides the messages to other devices that are connected to the same local access network, AP 700, like PC 710.

The filter application 320 will receive the filter criteria from the storage 400. There are different possibilities for filter criteria applied, examples are:
A list of sender identities, e.g. MSISDNs or real names or parts of real names, are stored and read by the filter application 320. Each message sender address is compared with the entries in the list, only sender addresses not in the list will be forwarded to the device application

A list of keywords, e.g. "Transaction" or "mTAN", is stored and read by the filter application 320. The contents of each message is searched for the entries in the list, only messages without listed keywords will be forwarded to the device application

The start or end or any other specific part of each message is compared with reserved words of specific meaning, e.g. "NO FORWARDING MESSAGE", "ORIGINAL RECEIVER ONLY" or "SECRET MESSAGE" will prevent message sharing with other devices. All further messages will be shared.

The message header contains a flag, one or more bits, to indicate the message should not be forwarded. The header may have the same structure as today with some bits or bit combinations having the described new meaning. The header may also be enhanced of the current standard to encode the new information.

Any combination of these filter criteria may also be used. Note that in contrast to known technical SMS filter functions the messages that are received by the UE 100 and finally submitted to the messaging application 330 are handled completely unchanged in comparison to other messages from the perspective of the user of the UE 100. That is, the messages are presented or displayed to the user on UE 100, a sound may be played, the messages may be stored in the storage for later reference etc. One of the differences between filtered and not filtered messages according to the current invention is that messages are not treated within the application, i.e. they are not forwarded or shared to/with other devices.
The first two described criteria above will require a list of addresses or keywords being stored in the storage 400. It may be typed in the mobile phone manually and stored in the storage 400. It may also be pre-configured to the storage, e.g. with storage of the operating system in the storage 400 and updated every time with the OS. It may also be received over the internet from a server similar or identical to the device server 720. A push service may be used to inform the UE about updates and the UE can request an updated list via WLAN AP 700 or cellular BS 800 from the respective server 720. The received list will be stored on the server for further usage by the filter application. A further alternative is a one-time submission of a message from the same to-be-filtered sender address i.e. from the banking server to the UE, e.g. as part of the registration of the phone number as the one to be used for transaction authentication via mTAN. The banking server itself could submit such a message whether triggered by the user explicitly or triggered by registering the phone number. The user could copy the phone number from the received message into a manual filter address editor on his phone or, if the phone supports the feature, could be given the option to mark the sender address of the message as to-be-filtered. Variations of the letter idea exist, e.g. a silent SMS could be used by the bank, silent means the SMS is not shown to the user, which is marked to contain a sender address to be filtered and the messaging application 330 could store the address in the appropriate list on the storage. The registration of a mobile phone number for usage in internet banking may contain a required step of transmission of one of the above messages to the mobile phone 100 and receiving an acknowledgement message back that acknowledges the entry of the respected to-be-filtered address in the respective list.

The filter application 320 may be implemented in hardware or software and if in software, it may be a stand-alone implementation executed in the CPU 300 or on another hardware not shown in figure 1. It may be executed on a secure processor different from the CPU, e.g. on a smart card like the SIM. The filter application 320 may also be part of the OS 310, the messaging application 330 or the device application 340 and thus it may be implemented as a filtering function of any other piece of software running within the mobile phone. If the filtering application is executed on the SIM the above mentioned list of filter criteria may also be stored on the SIM and the maintenance / update of the SIM may be done via special SMS similar to the silent SMS that are directly forwarded to the SIM by the phone These SMS addressed to the SIM already exist today, the mechanism could thus be re-used.

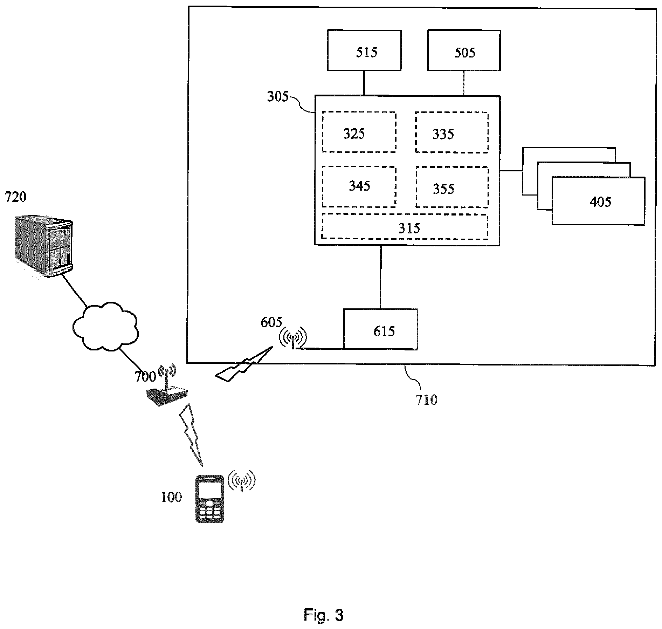

Figure 3 depicts the PC 710 connected via WLAN to a WLAN access point, AP 700, and from there to UE 100 within the local network and to the device server 720 via internet. PC 710 comprises the WLAN connectivity with an antenna 605 and the WLAN RF and base band 615. Further it comprises a central processing unit CPU 305, storage means 405 in form of internal or external memory, display means or a display connector for an external display 505 and other peripherals or peripheral connectors 515, e.g. for connection of input/output devices like mouse and keyboard.

The CPU is enabled to execute various pieces of software, stored in the storage 405, e.g. the operating system 315, a continuity application 345, a filtering application 325, a browser application 335 and various other applications 355. The CPU is connected to the storage means to read application software as well as data from and write to it.

The continuity application will connect to the device server to exchange information about devices that are authenticated and authorized to perform application continuity, "hand off", with PC 710. In this embodiment UE 100 is one such device, because it exchanged the appropriate information with the device server as well.

Now, for state of the art applications that support the device feature, applications 335 and 355 will communicate with the continuity application 345 to allow the respective applications and the user of these applications on other devices like UE 100 to continue exactly from where they left the application on PC 710. For instance the browser application 335 will communicate with the device application and that will communicate with the respective application on UE 100 to offer this feature. Similarly, applications 355 can offer a similar functionality.

According to an aspect of the current invention, applications or functions within applications are filtered in the filter application 345 and may thus be blocked from being offered to further devices. The applications will communicate with the device application via the filter application. The filter application will read filtering criteria from the storage means 405 and block this applications or functions within applications that are to be filtered according to the criteria.

The filter criteria are either describing applications as a whole that are to be blocked, e.g. "StarMoney" or "EasyTransaction", or they describe parameters that block certain functions. The letter may be used to block certain web pages, either by their web address "https://nameofbank.de", a part of a web address e.g. a domain name "nameofbank.de" or by the originator of their TLS-certificate that uniquely identifies the originator, e.g. "NAMEOFBANK AG and Co. KGaA". The letter is the preferred embodiment of this solution. A list of such criteria is securely stored in the storage means 405. It is important that changes to these lists can only be made with administrator rights, so that malicious changes are excluded.

The initial supply of a list of filter criteria to the storage means and a regular update may be done by the user manually using the keyboard or any other input device 515 connected to PC 710. It may alternatively be received via the internet and local network from the server 720 or it may be received via any kind of communication means the PC has to offer, e.g. mail, messages and removable memory.

The filtering application may be implemented stand alone, as part of each of the applications that are security relevant 335, 355, e.g. as part of the browser, as part of the device application 345 or as part of the operating system 315. The filtering and blocking of applications or functionality may be done before starting a function or application, at the start, during execution or at the point in time when the application or functionality is to be continued on another device. That is, the filtering function may be invoked at device start-up or a similar point in time that is independent of the application start. The blocking could mean that the to-be-blocked application is started in another environment or with different parameters on the device to ensure that sharing is prevented. Alternatively, the filtering could be invoked at application start and could still lead to alternative starting environments or parameters. At any point during execution, latest when the application or function is requested by the user to be continued on another device, the filtering could also take place with preventing the requested continuation of work.

In this invention the device application is used as an example for a feature, in which applications are continued on other devices. SMS or text messages are used as an example for information that is exchanged on a secure channel to authorize a certain security relevant transaction. Internet banking is used as an example for a security relevant application that relies on information transfer on a secure channel. These examples do not limit the usage of the invention for other application, other information to be exchanged and other features for continuing applications.

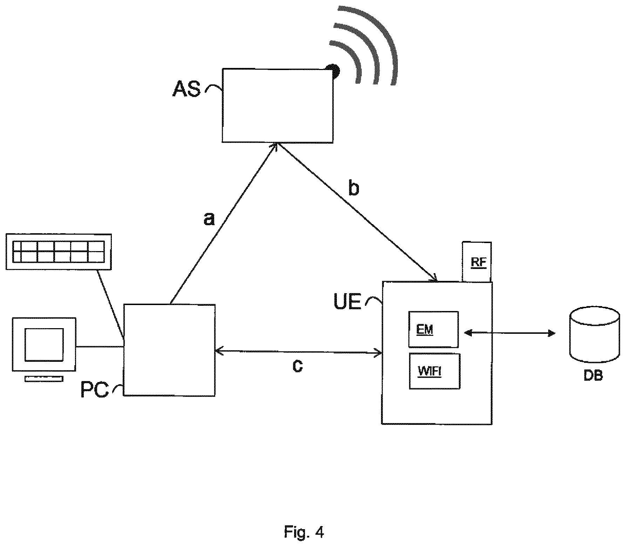

Figure 4 shows a system for authorization of access to information signals in a telecommunication system. In the present embodiment an authentication or authorization server AS is shown which communicates with a computer system PC and user equipment UE. The computer system PC is operated by means of further peripheral devices. It is arranged to communicate with the authorization server over a connection a. The personal computer PC demands a security code from the authorization server AS. Hence, first a request is sent over connection a to the authorization server AS. Upon reception of the request the authorization server AS generates a security code and transmits the security code to a cell phone over a connection b. The security code may be comprised in an SMS, which is received over a RF antenna.

Hence, the authorization server AS forms the first network device, the cell phone forms the second network device and the computer system PC forms the third network device. The confidential information signals correspond to the security code.

Once the information signals are received the user equipment UE does not know, whether the information received by the authorization AS is confidential or not. Therefore, it is necessary to evaluate said message. As the authorization server AS recognizes that the requested information is confidential a security flag is set in the SMS header. The header indicates that the message body holds confidential information, which shall be sent to the first network device but must not be shared with the computer system PC. Hence, the user equipment can receive all kinds of SMS, whether confidential or not, and is not restricted by filtering rules preventing messages to be received. Upon reception of the SMS with the adapted header such that the security flag is set, the user equipment applies the evaluation metric by means of the evaluation module EM. Applying the evaluation metric means to apply the evaluation rules being stored in a database DB for obtaining the respective evaluation results. The evaluation module may for instance check the message header for the respective flag and find that the flag is set and therefore the obtained information signals, namely the received SMS, must not be forwarded or shared with the third network device, namely the computer system PC. In case the computer system PC requests the confidential information signals from the second network device UE over the connection c the second network device will not allow access to the information signals and will deny to forward said information signals to the third network device.

In case the evaluation module EM does not retrieve a security flag to be set it recognizes that the received SMS is not confidential and can be forwarded or shared upon request with the third network device over the connection c.

The person skilled in the art appreciates that the internet connection can be wireless or wired and that connections a, b and c can be operated according to GSM, UMTS, LTE, LTE-U or any W-LAN standard. Accordingly a WI-FI module is shown in the present figure 4. Further modules such as an LTE module are not shown in the present figure 4.

Furthermore, it may be of advantage to allow the authorization server AS to connect with the database DB such that the evaluation rules can be adapted. Hence, it is possible, that the security information is received from said database. It is therefore possible to set the security information for a first message such that a header information flag is set and furthermore regarding a second security information that a specific keyword is included into the message body. After updating the evaluation metric the user equipment knows that for a first received message a flag is to be identified and for a second received message a specific keyword in the message body is to be identified. Hence, the evaluation metric can be updated at runtime, without requesting further user input. The database DB can be directly coupled to the user equipment, it can be arranged inside the user equipment and it can be accessed through further network devices, such as a server.

According to one embodiment the database DB is stored on a SIM card of the cell phone and provides contacts of the user, which identify third network devises. In this embodiment the computer system PC is granted access to the information signals in case the computer system PC is assigned to a known contact of the user being stored on the SIM card.

According to a further embodiment of the present invention the evaluation metric may be configured such that no flags or keywords are to be identified but that further message properties, such as the message size or the message sender, are considered. It may furthermore be the case that a sender of the information signals always qualifies the message to be confidential. According to this aspect of the present invention the authorization server AS may generate a certificate for access of certain web services. Once messages from this specific authorization service are received they are never forwarded or shared. It may furthermore be of advantage to store such access rights in the database DB as well.

## Claims

1. A method in a telecommunication system comprising at least a first network device (810), a second network device (100) and a third network device (710) for authorizing access for the third network device to at least one information signal, the method comprising:
requesting by the third network device (710) transmission of the at least one information signal from the first network device (810) to the second network device (100);
receiving by the second network device (100) the at least one information signal from the first network device (810); **characterized by**
applying by the second network device (100) a stored evaluation metric on the received at least one information signal, wherein applying the stored evaluation metric comprises an evaluation of at least one information signal bit of the received at least on information signal; and
assigning by the second network device (100) an access right for accessing the received at least one information signal to the third network device (710) as a function of a result of applying the stored evaluation metric on the received at least one information signal, wherein an access right for accessing a first information signal having a first result of applying the stored evaluation metric is granted to the third network device by the second network device and an access right for accessing a second information signal having a second result of applying the stored evaluation metric is refused to the third network device by the second network device.

2. The method according to claim 1, wherein the information signal comprises at least one of a signal header information, a signal body, a sender information, a receiver information, a message content, at least one access right bit, at least one status bit and an access right information.

3. The method according to claim 1 or 2, wherein the assigned access right controls at least one of a read operation of the third network device, a write operation of the third network device, a forwarding operation of the information signal from the second network device to the third network device, an absolute timeslot for access to the information signal by the third network device and a relative timespan for access to the information signal by the third network device.

4. The method according to any preceding claim, wherein the evaluation metric indicates an identity of at least one third network device (710) with a predefined access right to the information signal.

5. The method according to any preceding claim, wherein at least one of the network devices is one of a user equipment, a base station, a router, an access point, a personal computer, a notebook, a tablet, a cell phone, a SMS center, a server, a client and a cluster.

6. The method according to any preceding claim, wherein the received information signal is represented by at least one of a SMS, MMS, E-Mail, text message, fax message, an authorization code and an authentication code.

7. The method according to any preceding claim, wherein the second network device (100) holds full access rights independently of the access right being assigned to the third network device.

8. The method according to any preceding claim, wherein applying the evaluation metric further comprises at least one of
retrieving keywords from the information signal,
retrieving sender identity information from the information signal,
retrieving receiver identity information from the information signal.

9. The method according to any preceding claim, wherein the stored evaluation metric is stored on at least one of a SIM card, a server, a SMS center, an authorization provider and an authentication provider.

10. The method according to any preceding claim, wherein the telecommunication network is a wireless network being operated according to at least one of GSM, UMTS, the LTE family of standards and the IEEE 802.11 family of standards.

11. The method according to claim 10, wherein the wireless telecommunication network is operated in one of an infrastructure mode, a device-to-device mode, an ad-hoc mode and a cellular environment.

12. The method according to any preceding claim, wherein the first and the second network device (810, 100) communicate according to a first telecommunication protocol and the second and the third network device (100, 710) communicate according to a different, second telecommunication protocol.

13. The method according to any preceding claim, wherein the evaluation metric holds evaluation rules, which are updated at runtime.

14. A user equipment (100) for authorization of access to an information signal in a telecommunication system comprising a first network device (810), the user equipment (100) and a second network device (710), the user equipment comprising:
a reception module (210) for receiving at least one information signal from the first network device following a transmission request by the second network device; **characterized in that** the user equipment further comprises
an evaluation module (300) for applying a stored evaluation metric on the received at least one information signal, wherein applying the stored evaluation metric comprises an evaluation of at least one information signal bit of the received at least one information signal; and
an authorization module (300) for assigning an access right for accessing the received at least one information signal to the second network device (710) as a function of a result of applying the stored evaluation metric on the received at least one information signal, wherein an access right for accessing a first information signal having a first result of applying the stored evaluation metric is granted to the second network device and an access right for a second information signal having a second result of applying the stored evaluation metric is refused to the second network device.

15. A system for authorization of access to information signals in a telecommunication environment, comprising:
a second network device (100) receiving at least one information signal from a first network device (810) transmitted following a transmission request by a third network device (710);
**characterized by**
the second network device (100) applying a stored evaluation metric on the received at least one information signal, wherein applying the stored evaluation metric comprises an evaluation of at least one information signal bit of the received at least one information signal; and
the second network device (100) assigning an access right for accessing the received at least one information signal to the third network device (710) as a function of a result of applying the stored evaluation metric on the received at least one information signal, wherein an access right for accessing a first information signal having a first result of applying the stored evaluation metric is granted to the third network device by the second network device and an access right for a second information signal having a second result of applying the stored evaluation is refused to the third network device by the second network device.

## Patentansprüche

1. Verfahren in einem Telekommunikationssystem, das mindestens eine erste Netzwerkvorrichtung (810), eine zweite Netzwerkvorrichtung (100) und eine dritte Netzwerkvorrichtung (710) zum Autorisieren des Zugriffs für die dritte Netzwerkvorrichtung auf mindestens ein Informationssignal umfasst, wobei das Verfahren umfasst: Anfordern der Übertragung des mindestens einen Informationssignals von der ersten Netzwerkvorrichtung (810) zur zweiten Netzwerkvorrichtung (100) durch die dritte Netzwerkvorrichtung (710); Empfangen des mindestens einen Informationssignals von der ersten Netzwerkvorrichtung (810) durch die zweite Netzwerkvorrichtung (100); **gekennzeichnet durch** Anwenden einer gespeicherten Bewertungsmetrik auf das empfangene mindestens eine Informationssignal durch die zweite Netzwerkvorrichtung (100), wobei das Anwenden der gespeicherten Bewertungsmetrik eine Bewertung von mindestens einem Informationssignalbit des empfangenen mindestens einen Informationssignals umfasst; und Zuweisen eines Zugriffsrechts durch die zweite Netzwerkvorrichtung (100) zum Zugreifen auf das empfangene mindestens eine Informationssignal an die dritte Netzwerkvorrichtung (710) als Funktion eines Ergebnisses des Anwendens der gespeicherten Bewertungsmetrik auf das empfangene mindestens eine Informationssignal, wobei der dritten Netzwerkvorrichtung durch die zweite Netzwerkvorrichtung ein Zugriffsrecht zum Zugreifen auf ein erstes Informationssignal mit einem ersten Ergebnis des Anwendens der gespeicherten Bewertungsmetrik gewährt wird und ein Zugriffsrecht zum Zugreifen auf ein zweites Informationssignal mit einem zweiten Ergebnis des Anwendens der gespeicherten Bewertungsmetrik durch die zweite Netzwerkvorrichtung auf die dritte Netzwerkvorrichtung abgelehnt wird.

2. Verfahren nach Anspruch 1, wobei das Informationssignal eine Signalheaderinformation und/oder einen Signalkörper und/oder eine Senderinformation und/oder eine Empfängerinformation und/oder einen Nachrichteninhalt und/oder mindestens einen Zugriffsrechtsbit und/oder mindestens einen Statusbit und/oder eine Zugriffsrechtsinformation umfasst.

3. Verfahren nach Anspruch 1 oder 2, wobei das zugewiesene Zugriffsrecht einen Lesevorgang der dritten Netzwerkvorrichtung und/oder eine Schreibvorgang der dritten Netzwerkvorrichtung und/oder einen Weiterleitungsvorgang des Informationssignals von der zweiten Netzwerkvorrichtung zu der dritten Netzwerkvorrichtung und/oder ein absolutes Zeitfenster für den Zugriff auf das Informationssignal durch die dritte Netzwerkvorrichtung und/oder eine relative Zeitspanne für den Zugriff auf das Informationssignal durch die dritte Netzwerkvorrichtung steuert.

4. Verfahren nach einem vorhergehenden Anspruch, wobei die Bewertungsmetrik eine Identität von mindestens einer dritten Netzwerkvorrichtung (710) mit einem vordefinierten Zugriffsrecht auf das Informationssignal angibt.

5. Verfahren nach einem der vorhergehenden Ansprüche, wobei mindestens eine der Netzwerkvorrichtungen eine Benutzereinrichtung und/oder eine Basisstation und/oder ein Router und/oder ein Zugangspunkt und/oder ein Personal Computer und/oder ein Notebook und/oder ein Tablett und/oder ein Mobiltelefon und/oder ein SMS-Center und/oder ein Server und/oder ein Client und/oder ein Cluster ist.

6. Verfahren nach einem der vorhergehenden Ansprüche, wobei das empfangene Informationssignal durch mindestens eine SMS und/oder MMS und/oder E-Mail und/oder Textnachricht und/oder Faxnachricht und/oder einem Autorisierungscode und/oder einem Authentifizierungscode repräsentiert wird.

7. Verfahren nach einem der vorhergehenden Ansprüche, wobei die zweite Netzwerkvorrichtung (100) volle Zugriffsrechte besitzt, unabhängig davon, dass das Zugriffsrecht der dritten Netzwerkvorrichtung zugewiesen ist.

8. Verfahren nach einem der vorhergehenden Ansprüche, wobei die Anwendung der Bewertungsmetrik ferner mindestens eines der folgenden umfasst
Abrufen von Schlüsselwörtern aus dem Informationssignal,
Abrufen von Absenderidentitätsinformationen aus dem Informationssignal,
Abrufen von Empfängeridentitätsinformationen aus dem Informationssignal.

9. Verfahren nach einem der vorhergehenden Ansprüche, wobei die gespeicherte Bewertungsmetrik auf einer SIM-Karte und/oder einem Server und/oder einem SMS-Center und/oder einem Autorisierungsanbieter und/oder einem Authentifizierungsanbieter gespeichert ist.

10. Verfahren nach einem der vorhergehenden Ansprüche, wobei das Telekommunikationsnetzwerk ein drahtloses Netzwerk ist, das gemäß GSM und/oder UMTS und/oder der LTE-Familie von Standards und/oder der IEEE 802.11-Familie von Standards betrieben wird.

11. Verfahren nach Anspruch 10, wobei das drahtlose Telekommunikationsnetzwerk in einem Infrastrukturmodus oder einem Vorrichtung-zu-Vorrichtung-Modus oder einem Ad-hoc-Modus und einer Mobilfunkumgebung betrieben wird.

12. Verfahren nach einem der vorhergehenden Ansprüche, wobei die erste und die zweite Netzwerkvorrichtung (810, 100) gemäß einem ersten Telekommunikationsprotokoll kommunizieren und die zweite und die dritte Netzwerkvorrichtung (100, 710) gemäß einem anderen, zweiten Telekommunikationsprotokoll kommunizieren.

13. Verfahren nach einem der vorhergehenden Ansprüche, wobei die Bewertungsmetrik Bewertungsregeln enthält, die bei der Laufzeit aktualisiert werden.

14. Benutzereinrichtung (100) zur Autorisierung des Zugriffs auf ein Informationssignal in einem Telekommunikationssystem, das eine erste Netzwerkvorrichtung (810), die Benutzereinrichtung (100) und eine zweite Netzwerkvorrichtung (710) umfasst, wobei die Benutzereinrichtung umfasst:
ein Empfangsmodul (210) zum Empfangen mindestens eines Informationssignals von der ersten Netzwerkvorrichtung nach einer Übertragungsanforderung durch die zweite Netzwerkvorrichtung; **dadurch gekennzeichnet,**
**dass** die Benutzereinrichtung ferner ein Bewertungsmodul (300) zum Anwenden einer gespeicherten Bewertungsmetrik auf das empfangene mindestens eine Informationssignal umfasst, wobei das Anwenden der gespeicherten Bewertungsmetrik eine Bewertung von mindestens einem Informationssignalbit des empfangenen mindestens einen Informationssignals umfasst; und ein Autorisierungsmodul (300) zum Zuweisen eines Zugriffsrechts für den Zugriff auf das empfangene mindestens eine Informationssignal an die zweite Netzwerkvorrichtung (710) als Funktion eines Ergebnisses des Anwendens der gespeicherten Bewertungsmetrik auf das empfangene mindestens eine Informationssignal, wobei der zweiten Netzwerkvorrichtung ein Zugriffsrecht für den Zugriff auf ein erstes Informationssignal mit einem ersten Ergebnis des Anwendens der gespeicherten Bewertungsmetrik gewährt wird und der zweiten Netzwerkvorrichtung ein Zugriffsrecht für ein zweites Informationssignal mit einem zweiten Ergebnis des Anwendens der gespeicherten Bewertungsmetrik verweigert wird.

15. System zur Autorisierung des Zugriffs auf Informationssignale in einer Telekommunikationsumgebung, umfassend:
eine zweite Netzwerkvorrichtung (100), die mindestens ein Informationssignal von einer ersten Netzwerkvorrichtung (810) empfängt, die nach einer Übertragungsanforderung durch eine dritte Netzwerkvorrichtung (710) übertragen wird; **gekennzeichnet durch** die zweite Netzwerkvorrichtung (100), die eine gespeicherte Bewertungsmetrik auf das empfangene mindestens eine Informationssignal anwendet, wobei die Anwendung der gespeicherten Bewertungsmetrik eine Bewertung von mindestens einem Informationssignalbit des empfangenen mindestens einen Informationssignals umfasst; und
die zweite Netzwerkvorrichtung (100) ein Zugriffsrecht zum Zugriff auf das empfangene mindestens eine Informationssignal an die dritte Netzwerkvorrichtung (710) als Funktion eines Ergebnisses des Anwendens der gespeicherten Bewertungsmetrik auf das empfangene mindestens eine Informationssignal zuweist, wobei ein Zugriffsrecht zum Zugriff auf ein erstes Informationssignal mit einem ersten Ergebnis des Anwendens der gespeicherten Bewertungsmetrik der dritten Netzwerkvorrichtung durch die zweite Netzwerkvorrichtung gewährt wird und ein Zugriffsrecht für ein zweites Informationssignal mit einem zweiten Ergebnis des Anwendens der gespeicherten Bewertung durch die zweite Netzwerkvorrichtung auf die dritte Netzwerkvorrichtung verweigert wird.

## Revendications

1. Procédé dans un système de télécommunications, comprenant au moins un premier dispositif en réseau (810), un deuxième dispositif en réseau (100) et un troisième dispositif en réseau (710), permettant d'autoriser un accès fait au troisième dispositif en réseau vers au moins un signal d'informations, le procédé comprenant :
la demande faite par le troisième dispositif en réseau (710) d'une transmission du ou des signaux d'informations à partir du premier dispositif en réseau (810) vers le deuxième dispositif en réseau (100),
la réception par le deuxième dispositif en réseau (100) du ou des signaux d'informations en provenance du premier dispositif en réseau (810), **caractérisé par**
l'application par le deuxième dispositif en réseau (100) d'une mesure d'évaluation stockée concernant le ou les signaux d'informations reçus, l'application de la mesure d'évaluation stockée comprenant une évaluation d'au moins un bit de signal d'informations du ou des signaux d'informations reçus, et
l'assignation, par le deuxième dispositif en réseau (100), d'un droit d'accès fait au troisième dispositif en réseau (710) permettant d'accéder à ce ou ces signaux d'informations reçus en fonction du résultat de l'application de la mesure d'évaluation stockée sur le ou les signaux d'informations reçus ; où un droit d'accès permettant d'accéder à un premier signal d'informations présentant un premier résultat de l'application de la mesure d'évaluation stockée est accordé au troisième dispositif en réseau par le deuxième dispositif en réseau et où un droit d'accès permettant d'accéder à un second signal d'informations présentant un second résultat de l'application de la mesure d'évaluation stockée est refusé au troisième dispositif en réseau par le deuxième dispositif en réseau.

2. Procédé selon la revendication 1, dans lequel le signal d'informations comprend au moins l'un parmi une information d'en-tête de signal, un corps de signal, une information sur l'émetteur, une information sur le destinataire, un contenu de message, au moins un bit de droits d'accès, au moins un bit d'état et une information sur le droit d'accès.

3. Procédé selon la revendication 1 ou la revendication 2, dans lequel le droit d'accès assigné pilote au moins l'une d'une opération de lecture du troisième dispositif en réseau, d'une opération d'écriture du troisième dispositif en réseau, d'une opération de transfert du signal d'informations depuis le deuxième dispositif en réseau jusqu'au troisième dispositif en réseau, d'une tranche de temps absolue pour le signal d'informations par le troisième dispositif en réseau et d'une durée relative offerte au troisième dispositif en réseau pour accéder au signal d'informations.

4. Procédé selon l'une quelconque des revendications précédentes, dans lequel la mesure d'évaluation indique l'identité d'au moins un troisième dispositif en réseau (710) présentant un droit d'accès prédéfini au signal d'informations.

5. Procédé selon l'une quelconque des revendications précédentes, dans lequel au moins l'un des dispositifs en réseau est l'un d'un équipement utilisateur, d'une station de base, d'un routeur, d'un point d'accès, d'un ordinateur personnel, d'un ordinateur bloc-notes, d'une tablette, d'un téléphone cellulaire, d'un centre de messagerie SMS, d'un serveur, d'un client et d'un groupe.

6. Procédé selon l'une quelconque des revendications précédentes, dans lequel le signal d'informations reçu est représenté par au moins l'un d'un message SMS, d'un message MMS, d'un message électronique, d'un message textuel, d'un message de télécopie, d'un code d'autorisation et d'un code d'authentification.

7. Procédé selon l'une quelconque des revendications précédentes, dans lequel le deuxième dispositif en réseau (100) détient des droits d'accès complets indépendamment du droit d'accès assigné au troisième dispositif en réseau.

8. Procédé selon l'une quelconque des revendications précédentes, dans lequel l'application de la mesure d'évaluation comprend au moins une opération parmi :
la récupération de mots-clés auprès du signal d'informations,
la récupération d'informations sur l'identité de l'émetteur auprès du signal d'informations,
la récupération d'informations sur l'identité du destinataire auprès du signal d'informations.

9. Procédé selon l'une quelconque des revendications précédentes, dans lequel la mesure d'évaluation stockée est mémorisée sur au moins l'un parmi une carte SIM, un serveur, un centre de messagerie SMS, un fournisseur d'autorisation et un fournisseur d'authentification.

10. Procédé selon l'une quelconque des revendications précédentes, dans lequel le réseau de télécommunications est un réseau sans fil opéré en fonction d'au moins une norme parmi la norme GSM, la norme UMTS, la famille de normes LTE et la famille de normes IEEE 802.11.

11. Procédé selon la revendication 10, dans lequel le réseau de télécommunications sans fil est opéré dans l'un d'un mode d'infrastructure, d'un mode dispositif à dispositif, d'un mode ad-hoc et d'un environnement cellulaire.

12. Procédé selon l'une quelconque des revendications précédentes, dans lequel le premier et le deuxième dispositif en réseau (810, 100) communiquent conformément à un premier protocole de télécommunications, et le deuxième et le troisième dispositif en réseau (100, 710) communiquent conformément à un second protocole différent de télécommunications.

13. Procédé selon l'une quelconque des revendications précédentes, dans lequel la mesure d'évaluation maintient des règles d'évaluation qui sont mises à jour lors de l'exécution.

14. Équipement utilisateur (100) permettant une autorisation d'accès à un signal d'informations dans un système de télécommunications comprenant un premier dispositif en réseau (810), l'équipement utilisateur (100) et un deuxième dispositif en réseau (710), l'équipement utilisateur comprenant :
un module de réception (210) destiné à recevoir au moins un signal d'informations en provenance du premier dispositif en réseau à la suite d'une demande de transmission opérée par le second dispositif en réseau,
**caractérisé en ce que** l'équipement utilisateur comprend en outre :
un module d'évaluation (300) destiné à appliquer une mesure d'évaluation stockée sur le ou les signaux d'informations reçus, où l'application de la mesure d'évaluation stockée comprend une évaluation d'au moins un bit de signal d'informations du ou des signaux d'informations reçus, et
un module d'autorisation (300) destiné à assigner au deuxième dispositif en réseau (710) un droit d'accès permettant d'accéder à ce ou ces signaux d'informations reçus en fonction du résultat de l'application de la mesure d'évaluation stockée sur le ou les signaux d'informations reçus ; un droit d'accès, permettant d'accéder à un premier signal d'informations présentant un premier résultat d'application de la mesure d'évaluation stockée, étant accordé au deuxième dispositif en réseau, et un droit d'accès, pour un second signal d'informations présentant un second résultat d'application de la mesure d'évaluation stockée, étant refusé au second dispositif en réseau.

15. Système permettant une autorisation d'accès à des signaux d'informations dans un environnement de télécommunications, comprenant :
un deuxième dispositif en réseau (100) recevant au moins un signal d'informations en provenance d'un premier dispositif en réseau (810) transmis à la suite d'une demande de transmission opérée par un troisième dispositif en réseau (710), **caractérisé par** :
l'application, par le deuxième dispositif en réseau (100), d'une mesure d'évaluation stockée sur le ou les signaux d'informations reçus, l'application de la mesure d'évaluation stockée comprenant une évaluation d'au moins un bit de signal d'informations du ou des signaux d'informations reçus, et
l'assignation faite au troisième dispositif en réseau (710) par le deuxième dispositif en réseau (100) d'un droit d'accès permettant d'accéder à ce ou ces signaux d'informations reçus, en fonction du résultat de l'application de la mesure d'évaluation stockée sur le ou les signaux d'informations reçus ; un droit d'accès, permettant d'accéder à un premier signal d'informations présentant un premier résultat d'application de la mesure d'évaluation stockée, étant accordé au troisième dispositif en réseau par le deuxième dispositif en réseau, et un droit d'accès, pour un second signal d'informations présentant un second résultat d'application de la mesure d'évaluation stockée, étant refusé au troisième dispositif en réseau par le deuxième dispositif en réseau.
